(19) **Europäisches Patentamt**
**European Patent Office**
**Office européen des brevets**

(11) **EP 1 996 428 B1**

(12) **EUROPÄISCHE PATENTSCHRIFT**

(45) Veröffentlichungstag und Bekanntmachung des Hinweises auf die Patenterteilung:
**12.10.2011  Patentblatt 2011/41**

(21) Anmeldenummer: **07723374.0**

(22) Anmeldetag: **19.03.2007**

(51) Int Cl.:
**B60N 2/225** (2006.01)

(86) Internationale Anmeldenummer:
**PCT/EP2007/002407**

(87) Internationale Veröffentlichungsnummer:
**WO 2007/110169 (04.10.2007 Gazette 2007/40)**

(54) **UMLAUFGETRIEBEVORRICHTUNG**

EPICYCLIC GEARING DEVICE

DISPOSITIF DE TRANSMISSION ROTATIVE

(84) Benannte Vertragsstaaten:
**DE FR GB**

(30) Priorität: **23.03.2006   DE 102006014518**

(43) Veröffentlichungstag der Anmeldung:
**03.12.2008   Patentblatt 2008/49**

(73) Patentinhaber: **Magna Seating (Germany) GmbH**
**63877 Sailauf (DE)**

(72) Erfinder: **KULIHA, Norbert**
**63773 Goldbach (DE)**

(74) Vertreter: **Völger, Silke Beatrix et al**
**Magna International (Germany) GmbH**
**Kurfürst-Eppstein-Ring 11**
**63877 Sailauf (DE)**

(56) Entgegenhaltungen:
**DE-A1- 10 136 349     DE-A1- 10 144 840**
**DE-A1- 10 152 822**

**Beschreibung**

Die vorliegende Erfindung betrifft eine Umlaufgetriebevorrichtung, insbesondere zur Verstellung einer Lehne eines Fahrzeugsitzes, sowie einen Fahrzeugsitz mit einer derartigen Umlaufgetriebevorrichtung.

Sitze von Kraftfahrzeugen bestehen aus einer Sitzfläche, einer Rückenlehne und einer an der Rückenlehne angebrachten Kopfstütze. Um die Rückenlehne für verschiedene Personen individuell einstellbar zu machen, ist bei heutigen Kraftfahrzeugen ein Verstellmechanismus zum Kippen der Rückenlehne relativ zu der Sitzfläche vorgesehen.

Diese Verstellmechanismen sind häufig derart ausgebildet, dass an einem Ende der die Rückenlehne und die Sitzfläche koppelnden Verbindungswelle ein Rad angebracht ist, das die auf dem Sitz sitzende Person manuell bedienen kann. Durch einen geeigneten Getriebemechanismus kann so eine Bewegung der Rückenlehne bewirkt werden und die Person kann sich die Rückenlehne nach ihren Wünschen einstellen.

Dabei ist es nötig, den Verstellmechanismus derart auszugestalten, dass die Person eine Drehbewegung der Lehne mit einem geringen Kraftaufwand bewirken kann. Des weiteren sollte die Lehne, wenn sie einmal eingestellt worden ist, ihre Position beibehalten und sich während des Fahrbetriebs des Kraftfahrzeugs nicht verstellen. Des weiteren sollte die Rückenlehne nur um ein geringes Maß hin und her bewegbar sein, wenn sie fest in eine gewünschte Position eingestellt ist. Das heißt, die Lehne sollte in ihrer einmal eingestellten Position ein möglichst geringes Spiel aufweisen.

Aus der DE 101 44 840 A1 ist ein Beschlag für einen Fahrzeugsitz bekannt. Der bekannte Beschlag besteht aus einem ersten Beschlagteil, einem mit dem ersten Beschlagteil in Getriebeverbindung stehenden zweiten Beschlagteil, einem Mitnehmerring, welcher wenigstens teilweise einen im ersten Beschlagteil drehbar gelagerten Exzenter zum Antrieb einer Abwälzbewegung des zweiten Beschlagteils im ersten Beschlagteil definiert, und einer drehbar gelagerten; antreibbaren Mitnehmerbuchse. Dabei sind die Mitnehmerbuchse und der Mitnehmerring formschlüssig durch ein Übertragungsprofil miteinander verbunden.

Eines der Beschlagteile ist mit der Sitzfläche, das andere mit der Rückenlehne verbunden. Somit kann durch eine Betätigung des Drehrades eine Abwälzbewegung des einen Beschlagteils in dem anderen hervorgerufen werden, so dass die Rückenlehne relativ zu der Sitzfläche kippt. Die Abwälzbewegung erfolgt dabei exzentrisch. Die Exzentrizität wird durch zwei Keile hervorgerufen, die sich zwischen den beiden Beschlagteilen mitdrehen. Diese Keile sind derart ausgestaltet, dass bei einer Kraftausübung auf die Rückenlehne die Reibungskräfte an den Keilen derart groß werden, dass eine Bewegung der Rückenlehne blockiert ist. Somit ist zwar eine Verstellung der Rückenlehne mittels des Drehrades möglich, eine Kraftausübung auf die Rückenlehne ruft jedoch nur eine geringe Drehbewegung hervor, da die Keile die Bewegung nach einer kurzen Wegstrecke sperren.

Diese geringe Drehbewegung, die bei einer Kraftausübung auf die Rückenlehne auftritt, ist jedoch noch so groß, dass sie störend für eine auf dem Fahrzeugsitz sitzende Person sein kann. Da die Rückenlehne nachgibt, ist des weiteren häufig ein Nachstellen der Rückenlehne notwendig, wenn sich die Person in den Fahrzeugsitz gesetzt hat. Des weiteren treten während einer Fahrt pulsierende Belastungen des Getriebes auf. Die Reibungskräfte an den Keilen können diese pulsierenden Lasten häufig nicht ausgleichen, so dass ein Kriechen des Getriebes auftritt, und sich der Sitz langsam verstellt.

Erfindungsgemäß wird daher eine Umlaufgetriebevorrichtung, insbesondere zur Verstellung einer Lehne eines Fahrzeugsitzes, vorgeschlagen, die folgendes umfasst: ein mit einer Innenverzahnung versehenes erstes Beschlagteil, eine Stufenscheibe mit einer einen ersten Radius r aufweisenden ersten Stufe und einer einen zweiten Radius R aufweisenden zweiten Stufe, wobei der zweite Radius R größer ist als der erste Radius r und wobei die zweite Stufe der Stufenscheibe exzentrisch in dem ersten Beschlagteil angeordnet ist, ein mit einer Außenverzahnung versehenes zweites Beschlagteil, das konzentrisch auf der ersten Stufe der Stufenscheibe angeordnet ist, sowie zwei Keilelemente, die derart zwischen der Stufenscheibe und dem ersten Beschlagteil angeordnet und antreibar sind, um eine relativ zueinander erfolgende Abwälzbewegung der kämmerden Innen- und Außenverzahnung zu bewirken.

Durch die Bereitstellung der Stufenscheibe ist es möglich, die Keilelemente weiter entfernt vom Drehmittelpunkt anzuordnen. Dadurch ergeben sich geänderte Hebelverhältnisse, die ein Umlaufgetriebe ermöglichen, das weniger Spiel zuläßt und das aufgrund pulsierender Belastungen nicht kriecht. Die Änderung der Hebelverhältnisse wird im weiteren Verlauf anhand eines Ausführungsbeispiels der Erfindung unter Bezugnahme auf die Zeichnung genauer beschrieben werden.

In einer Ausführungsform der Erfindung kann das erste Beschlagteil fest angeordnet sein und das zweite Beschlagteil wälzt sich ab, während in einer anderen Ausführungsform der Erfindung das zweite Beschlagteil fest angeordnet sein kann und das erste Beschlagteil sich abwälzt.

Die erfindungsgemäße Umlaufgetriebevorrichtung kann des weiteren ein Federelement aufweisen, das die zwei Keile miteinander verkoppelt und zur Spielverminderung vorspannt.

In einer Ausführungsform der Erfindung kann sich mindestens ein Mitnehmerelement von der zweiten Stufe der Stufenscheibe radial nach außen erstrecken.

In einer weiteren Ausführungsform der Erfindung können zwei Mitnehmerelemente vorgesehen sein, die entgegengesetzt zueinander angeordnet sind.

Des weiteren kann eine Griffscheibe vorgesehen sein, die konzentrisch zu der Stufenscheibe angeordnet und drehfest mit der Stufenscheibe gekoppelt ist.

Bei dieser Ausführungsform wird die Griffscheibe gemeinsam mit der Stufenscheibe gedreht. Bis zur Berührung eines der Mitnehmerelemente mit einem Keil erfolgt keine Verstellung. Es ist aber die Reibkraft zwischen Keil und Mitnehmerscheibe zu überwinden. Dadurch entfällt der beim Stand der Technik auftretende Leerlauf, d.h. eine Bewegung des Verstellelementes ohne Verstellkraft.

In einer möglichen Ausführungsform der Erfindung ist eine mindestens ein Mitnehmerelement aufweisende Griffscheibe vorgesehen, die konzentrisch zu der Stufenscheibe so angeordnet ist, dass eine Drehung der Griffscheibe eine durch das mindestens eine Mitnehmerelement hervorgerufene Bewegung der Keile bewirkt. Dabei dreht sich die Stufenscheibe nicht in dem Beschlagteil, d.h. Leerlauf ist möglich.

Die erfindungsgemäße Umlaufgetriebevorrichtung kann des weiteren einen Sprengring zur Sicherung des ersten Beschlagteils, des zweiten Beschlagteils und der Stufenscheibe in axialer Richtung umfassen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

Figur 1     zeigt eine Explosionsansicht der erfindungsgemäßen Umlaufgetriebevorrichtung.

Figur 2     zeigt eine schematische Ansicht des erfindungsgemäßen Getriebeaufbaus.

Figur 3     zeigt eine schematische Ansicht des Getriebeaufbaus einer Umlaufgetriebevorrichtung des Standes der Technik mit den während des Betriebs wirkenden Kräften.

Figur 4     zeigt ebenfalls eine schematische Ansicht des erfindungsgemäßen Getriebeaufbaus, in der des wei- teren die während des Betriebs wirkenden Kräfte und Momente vereinfacht dargestellt sind.

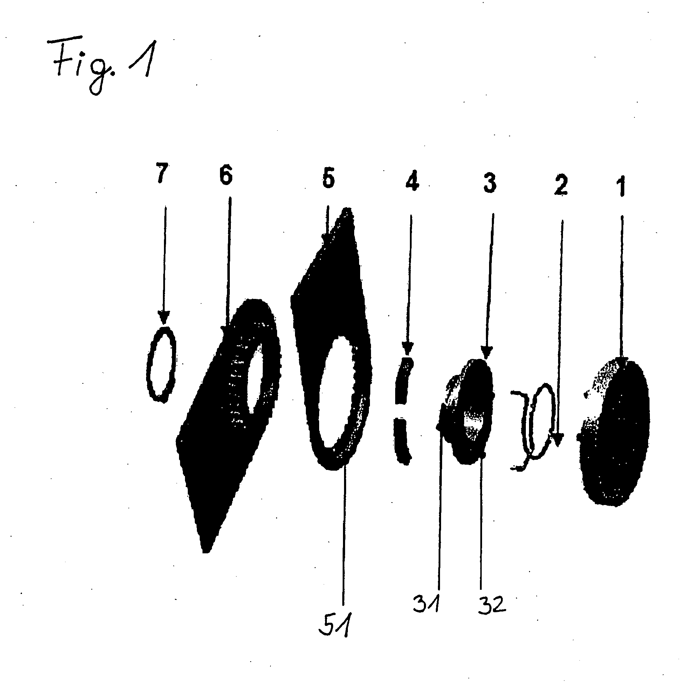

Figur 1 zeigt eine perspektivische Explosionsansicht der erfindungsgemäßen Umlaufgetriebevorrichtung. Die Umlaufgetriebevorrichtung umfasst eine Griffscheibe 1, ein Federelement 2, eine Stufenscheibe 3, zwei Keile 4, ein erstes Beschlagteil 5, ein zweites Beschlagteil 6 und einen Sprengring 7.

Die voranstehend genannten Teile sind dabei auf einer (nicht dargestellten) Welle angeordnet, die im vorliegenden beispielhaften Anwendungsfall die Sitzfläche und die Rückenlehne eines Fahrzeugsitzes verbindet. Die Griffscheibe 1 bildet dabei den Abschluß an einer Stirnseite der Welle. Die axiale Sicherung des Federelements 2, der Stufenscheibe 3, der zwei Keile 4, des ersten Beschlagteils 5 und des zweiten Beschlagteils 6 erfolgt mittels des Sprengrings 7, der in einer in der Welle vorgesehenen Nut angeordnet ist.

Das zweite Beschlagteil 6 ist mit der Sitzfläche des Fahrzeugsitzes verbunden und steht fest. Das erste Beschlagteil 5 ist mit der Lehne des Fahrzeugsitzes verbunden und rotiert in einer exzentrischen Abwälzbewegung um das zweite Beschlagteil 6. Es ist jedoch auch möglich, dass das erste Beschlagteil 5 feststeht und das zweite Beschlagteil 6 rotiert.

Erfindungsgemäß ist eine Stufenscheibe 3 vorgesehen, die eine erste Stufe 31 und eine zweite Stufe 32 aufweist. Der Radius der zweiten Stufe 32 ist dabei größer als der Radius der ersten Stufe 31.

Das erste Beschlagteil 5 weist eine Innenverzahnung auf. Neben der Innenverzahnung ist ein Absatz 51 ausgebildet. Der Durchmesser des Absatzes 51 ist größer als der Durchmesser der zweiten Stufe 32 der Stufenscheibe 3. Die Stufenscheibe 3 ist mit ihrer zweiten Stufe 32 in dem ersten Beschlagteil 5 auf dem Absatz 51 angeordnet. Die erste Stufe 31 ragt dabei durch das erste Beschlagteil 5 und befindet sich auf einer Ebene mit der Innenverzahnung des ersten Beschlagteils 5. Auf der ersten Stufe 31 der Stufenscheibe 3 ist das zweite Beschlagteil 6 konzentrisch angeordnet. Das zweite Beschlagteil 6 weist eine Außenverzahnung auf, die sich in einer Ebene mit der ersten Stufe 31 der Stufenscheibe 3 und der Innenverzahnung des ersten Beschlagteils 5 befindet. Somit greift die Außenverzahnung des zweiten Beschlagteils 6 teilweise in die Innenverzahnung des ersten Beschlagteils 5 ein.

Zwischen dem Absatz 51 des ersten Beschlagteils 5 und der zweiten Stufe 32 der Stufenscheibe 3 sind zwei Keile 4 angeordnet, die mittels eines Federelements 2 gekoppelt und vorgespannt sind.

Die Griffscheibe 1 ist drehfest mit der Stufenscheibe 3 verbunden, so dass eine Drehung der Griffscheibe eine Drehung der Stufenscheibe bewirkt.

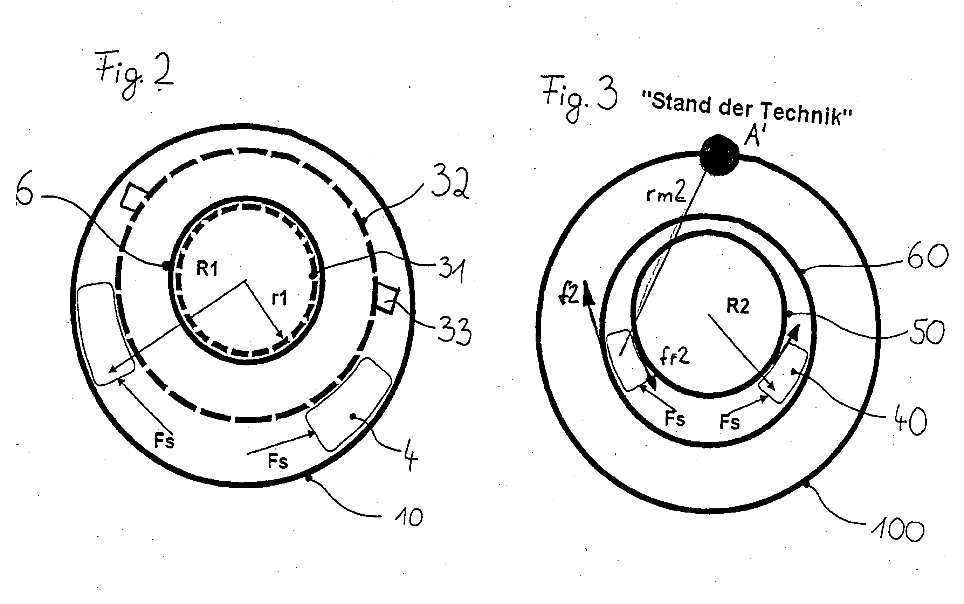

Figur 2 zeigt eine schematische Ansicht des erfindungsgemäßen Getriebeaufbaus. Die Stufenscheibe 3 ist mit einer gestrichelten Linie dargestellt und umfasst des weiteren zwei Mitnehmerelemente 33, die die Drehung der Stufenscheibe 3 auf die Keile 4 übertragen. Ihre erste Stufe 31 weist einen Radius $r_1$ auf. Auf dieser ersten Stufe 31 liegt das zweite Beschlagteil 6 auf. Die Außenverzahnung des zweiten Beschlagteils 6 greift mit der Innenverzahnung des ersten Beschlagteils 5 auf einem Umkreis 10 ineinander. Etwa mit dem gleichen Radius wie der Umkreis 10 sind die Keile 4 angeordnet. Die von dem Federelement erzeugte Federkraft Fs wirkt auf beide Keile in Umfangsrichtung koppelt ihren Bewegung und spannt sie vor.

Es ist zu beachten, dass die Keile 4 nicht unmittelbar an der Innenverzahnung des ersten Beschlagteils 5 angeordnet sind, sondern parallel versetzt auf dem Absatz 51 neben der Innenverzahnung liegen. Dort sind sie zwischen dem Absatz 51 und der zweiten Stufe 32 der Stufenscheibe 3 positioniert. Ihre Bewegung erfolgt in etwa entlang einem Radius R1.

Figur 3 zeigt eine schematische Ansicht des Getriebeaufbaus einer Umlaufgetriebevorrichtung des Standes der Technik. Ein erstes Beschlagteil 50, das eine Innenverzahnung aufweist, und ein zweites Beschlagteil 60, das eine Außenverzahnung aufweist, greifen entlang eines Umkreises 100 ineinander. Das erste Beschlagteil 50 ist auf einer Welle (nicht dargestellt) konzentrisch angeordnet. Das zweite Beschfagteil 60 ist exzentrisch um das erste Beschlagteil angeordnet. Unmittelbar zwischen dem ersten Beschlagteil 50 und dem zweiten Beschlagteil 60 sind zwei Keilelemente 40 angeordnet. Eine Bewegung der Keilelemente hat direkt eine exzentrische Abwälzbewegung des zweiten Beschlagteils 60 zu dem ersten Beschlagteil 50 zur Folge. Die Bewegung der Keile erfolgt dabei in Umfangsrichtung auf einem Kreis mit dem Radius R2.

Da die Keile 40 der Umlaufgetriebevorrichtung des Standes der Technik nahe der Innendurchmesser der Beschlagteile 50, 60 angeordnet sind, ist der Radius R2 wesentlich kleiner als der Radius R1, auf dem sich die Keile 4 der erfindungsgemäßen Umlaufgetriebevorrichtung bewegen. Die Keile 4 der erfindungsgemäßen Umlaufgetriebevorrichtung sind nahe dem Außendurchmesser bzw. nahe des Verzahnungsradius 10 angeordnet, und haben somit einen wesentlich größeren Abstand zum Drehmittelpunkt. Außerdem ist es durch diese Anordnung möglich mit Hilfe der Stufenscheibe einen Hinterschnitt zur axialen Sicherung des ersten 5 und des zweiten Beschlagteils 6 aufzubauen.

Die Keile 4 der erfindungsgemäßen Umlaufgetriebevorrichtung gleichen das Spiel aus, das die Stufenscheibe 3 in dem ersten Beschlagteil 5 aufgrund ihres geringeren Radius aufweist. Das Federelement 2 drückt die Keile 4 auseinander, wodurch letztendlich die Zahnung des zweiten Beschlagteils 6 und des ersten Beschlagteils 5 fest ineinander gedrückt werden. Ein Verrutschen der Keile 4, z.B. aufgrund pulsierender Belastungen der Umlaufgetriebevorrichtung, hat dadurch indirekt ein Spiel der Sitzlehne zur Folge.

Demgegenüber weisen bei der erfindungsgemäßen Getriebevorrichtung die Keile 4 von dem Drehmittelpunkt der Sitzlehne einen Abstand R1 auf, der größer als der Abstand R2 beim Stand der Technik ist, hat ein gleiches Maß einer Bewegung der Keile 4 bei der erfindungsgemäßen Umlaufgetriebevorrichtung eine geringere Auslenkung der Sitzlehne zur Folge. Die erfindungsgemäße Umlaufgetriebevorrichtung bewirkt somit generell ein geringeres Spiel der Sitzlehne.

Erfindungsgemäß sind auf der zweiten Stufe der Stufenscheibe 3 radial nach außen gerichtete Mitnehmerelemente 33 vorgesehen, die ein über die Griffscheibe 1 an die Stufenscheibe 3 aufgebrachtes Moment auf die Keile 4 übertragen.

Eine Bewegung der Keile 4 übt eine Kraft auf die zweite Stufe 32 der Stufenscheibe 3 aus. Die Stufenscheibe 3 gibt diese Kraft über die erste Stufe 31 auf das zweite Beschlagteil 6 weiter. Da das zweite Beschlagteil 6 fest mit der Sitzfläche verbunden ist und nicht rotieren kann, hat die Bewegung der Keile 4 eine Rotationsbewegung des ersten Beschlagteils 5 zur Folge, das sich mit seiner Innenverzahnung entlang des Umkreises 10 auf der Außenverzahnung des zweiten Beschlagteils 6 abwälzt. Da die Außenverzahnung des zweiten Beschlagteils 6 und die Innenverzahnung des ersten Beschlagteils 5 eine unterschiedliche Anzahl an Zähnen aufweisen, hat die Abwälzbewegung ein Rotieren des ersten Beschlagteils 5 und damit ein Kippen der Sitzlehne zur Folge.

Zusammengefaßt bewirkt ein Drehen der Griffscheibe 1 also eine Rotation der Stufenscheibe 3 und der Keile 4. Die Bewegung der Keile 4 in Umfangsrichtung bewirkt eine exzentrische Abwälzbewegung des ersten Beschlagteils 5 auf dem zweiten Beschlagteile 6. Durch die unterschiedliche Zähnezahl der beiden Beschlagteile 5, 6 wird so eine Drehung des ersten Beschlagteils 5 und ein Kippen der Lehne relativ zu der Sitzfläche bewirkt.

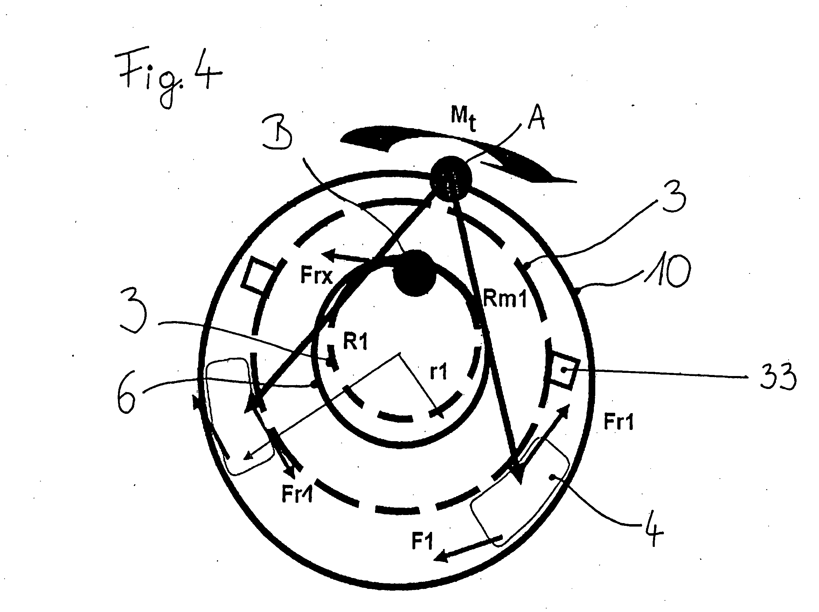

Figur 4 zeigt eine schematische Ansicht des erfindungsgemäßen Getriebeaufbaus, in der die während des Betriebs wirkenden Kräfte und Momente vereinfacht dargestellt sind. Der Eingriff der Verzahnungen des ersten Beschlagteils 5 und des zweiten Beschlagteils 10 erfolgt zum dargestellten Zeitpunkt in Punkt A. Der Kontaktpunkt der Stufenscheibe 3 und des zweiten Beschlagteils 6 ist mit B gekennzeichnet. Auf die Umlaufgetriebevorrichtung wirkt während der Fahrt bzw. bei Belastung ein Moment $M_t$. Das Moment $M_t$ kann kontinuierlich aufgebracht sein oder aber auch pulsierend auftreten.

Während des Betriebs wirkt das Moment $M_t$ über eine Kraft F1 auf die Keile 4. Der Kraft F1 wirken die Reibungskräfte Fr1 zwischen den Keilen 4 und der Stufenseheibe 3 entgegen. Für F1 gilt:

$$F1 = M_t/Rm1.$$

Entsprechend gilt bei der in Figur 3 dargestellten Umlaufgetriebevorrichtung des Standes der Technik unter der Annahme, dass das Moment $M_t$ um den Punkt A' aufgebracht wird:

$$f2 = M_t/rm2,$$

wobei f2 die aufgrund von $M_t$ auf die Keile 40 wirkende Kraft ist.

Da Rm1 wesentlich größer als rm2 ist, ist.die Kraft f2 somit wesentlich größer als F1. Somit ist die auf die Keile 4 wirkende Kraft F1 wesentlich kleiner als bei Umlaufgetriebevorrichtungen des Standes der Technik. Dadurch ist erfindungsgemäß ein wesentlich höheres Moment $M_t$ nötig, um die Reibungskraft Fr1 an den Keilen zu überwinden.

Falls das Moment $M_t$ groß genug ist, und die Reibungskräfte überwunden werden, kann eine Bewegung so weit erfolgen, bis die Keile an den Mitnehmerelementen 33 anschlagen. Eine weitere Bewegung kann dann nur erfolgen, wenn sich auch die Stufenscheibe 3 dreht.

Dazu müssen bei der erfindungsgemäßen Umlaufgetriebevorrichtung Reibungskräfte an zwei Stellen, nämlich an den Punkten A und B überwunden werden. Somit ergibt sich die gesamte Reibungskraft aus der Summe der Reibungskräfte an den Keilen 4 und im Punkt B. Demgegenüber treten beim Stand der Technik lediglich Reibungskräfte an den Keilen 40 auf. Somit ist es gegenüber dem Stand der Technik bei der erfindungsgemäßen Umlaufgetriebevorrichtung wahrscheinlicher, dass eine weitere Bewegung ausbleibt.

Somit sind erfindungsgemäß nicht nur die zu überwindenden Reibungskräfte wesentlich größer als beim Stand der Technik, sondern aufgrund der veränderten Hebelverhältnisse auch die an den Keilen 4 wirkenden Kräfte während des Betriebs wesentlich geringer. Die Wahrscheinlichkeit eines Kriechens des Getriebes ist somit deutlich reduziert. Ein ungewolltes Bewegen der Sitzlehne tritt nicht mehr auf.

Des weiteren hat eine Bewegung der Keile 4 ein geringeres Spiel der Sitzlehne zur Folge, da der Abstand der Keile 4 zum Drehmittelpunkt der Sitzlehne gegenüber dem Stand der Technik vergrößert ist.

Somit wird erfindungsgemäß eine Umlaufgetriebevorrichtung bereitgestellt, bei der sowohl die Wahrscheinlichkeit des Auftretens eines Kriechens des Getriebes als auch das Spiel der Sitzlehne deutlich reduziert ist.

## Patentansprüche

1. Umlaufgetriebevorrichtung, insbesondere zur Verstellung einer Lehne eines Fahrzeugsitzes, mit:

   - einem mit einer Innenverzahnung versehenen ersten Beschlagteil (5),
   - einer Stufenscheibe (3) mit einer einen ersten Radius r aufweisenden ersten Stufe (31) und einer einen zweiten Radius R aufweisenden zweiten Stufe (32), wobei der zweite Radius R größer ist als der erste Radius r und wobei die zweite Stufe (32) der Stufenscheibe (3) exzentrisch in dem ersten Beschlagteil (5) angeordnet ist,
   - einem mit einer Außenverzahnung versehenen zeiten Beschlagteil (6), das konzentrisch auf der ersten Stufe (31) der Stufenscheibe (3) angeordnet ist, und
   - zwei Keilelementen (4), die derart zwischen der Stufenscheibe (3) und dem ersten Beschlagteil (5) angeordnet und antreibbar sind, um eine retativ zueinander erfolgende Abwälzbewegung der kämmenden innen- und Außenverzahnung zu bewirken.

2. Umlaufgetriebevorrichtung nach Anspruch 1, bei der das erste Beschlagteil (5) fest angeordnet ist und sich das zweite Beschlagteil (6) abwälzt.

3. Umlaufgetriebevorrichtung nach Anspruch 1, bei der das zweite Beschlagteil (6) fest angeordnet ist und sich das erste Beschlagteil (5) abwälzt.

4. Umlaufgetriebevorrichtung nach einem der Ansprüche 1 bis 3, des weiteren mit einem Federelement (2), das die zwei Keile (4) miteinander verkoppelt.

5. Umlaufgetriebovorrichtung nach einem der Ansprüche 1 bis 4, bei der sich mindestens ein Mitnehmerelement (33) von der zweiten Stufe (32) der Stufenscheibe (3) radial nach außen verstreckt.

6. Umlaufgetriebevorrichtung nach Anspruch 5, bei dem zwei Mitnehmerelemente (33) vorgesehen sind, die entgegengesetzt zueinander angeordnet sind.

7. Umlaufgetriebcvorrichtung nach einem der Ansprüche 1 bis 6, des weiteren mit einer Griffscheibe (1), die konzentisch zu der Stufenscheibe (3) angeordnet und drehfest miL der Stufenscheibe (3) gekoppelt ist.

8. Umlaufgetriebevorrichtung nach einem der Ansprüche 1 bis 4, des weiteren mit einer mindestens ein Mitnehmerelement (33) aufweisenden Grifrscheibe (1), die konzentrisch zu der Stufenscheibe (3) so angeordnet ist, dass eine Drehung der Griffscheibe (1) eine durch das mindestens eine Mitnehmerelement (33) hervorgerufen Bewegung der Keile (4) bewirkt.

9. Umlaufgetriebevorrichtung nach einem der voranstchenden Ansprüche, des weiteren mit einem Sprengring (7) zur Sicherung des ersten Beschlagteils (5), des zweiten Beschlagteils (6) und der Stufenscheibe (3) in axialer Richtung.

10. Umlaufgetriebevorrichtung nach einem der voranstehenden Ansprüche, bei der die Anzahl der Zähne der Innenverzahnung des ersten Beschlagteils (5) nicht der Anzahl der Zähne der Außenverzahnung der zweiten Beschlagteils (6) entspricht.

## Claims

1. Epicyclic gear apparatus, in particular for adjusting a backrest of a vehicle seat, having:

   - a first fitting part (5) which is provided with an internal toothing system,
   - a stepped disk (3) having a first step (31) which has a first radius r and a second step (32) which has a second radius R, the second radius R being greater than the first radius r and the second step (32) of the stepped disk (3) being arranged eccentrically in the first fitting part (5),
   - a second fitting part (6) which is provided with an external toothing system and is arranged concentrically on the first step (31) of the stepped disk (3), and
   - two wedge elements (4) which are arranged between the stepped disk (3) and the first fitting part (5) and can be driven in such a way that they bring about a rolling movement of the meshing internal and external toothing system which takes place relative to one another.

2. Epicyclic gear apparatus according to Claim 1, in which the first fitting part (5) is arranged in a fixed manner and the second fitting part (6) rolls.

3. Epicyclic gear apparatus according to Claim 1, in which the second fitting part (6) is arranged in a fixed manner and the first fitting part (5) rolls.

4. Epicyclic gear apparatus according to one of Claims 1 to 3, furthermore having a spring element (2) which couples the two wedges (4) to one another.

5. Epicyclic gear apparatus according to one of Claims 1 to 4, in which at least one driver element (33) extends radially outward from the second step (32) of the stepped disk (3).

6. Epicyclic gear apparatus according to Claim 5, in which two driver elements (33) are provided which are arranged in opposite directions with respect to one another.

7. Epicyclic gear apparatus according to one of Claims 1 to 6, furthermore having a gripping disk (1) which is arranged concentrically with respect to the stepped disk (3) and is coupled fixedly in terms of rotation to the stepped disk (3).

8. Epicyclic gear apparatus according to one of Claims 1 to 4, further having a gripping disk (1) which has at least one driver element (33) and is arranged concentrically with respect to the stepped disk (3) in such a way that a rotation of the gripping disk (1) brings about a movement of the wedges (4) which is caused by the at least one driver element (33).

9. Epicyclic gear apparatus according to one of the preceding claims, furthermore having a circlip (7) for securing the first fitting part (5), the second fitting part (6) and the stepped disk (3) in the axial direction.

10. Epicyclic gear apparatus according to one of the preceding claims, in which the number of teeth of the internal toothing system of the first fitting part (5) does not correspond to the number of teeth of the external toothing system of the second fitting part (6).

## Revendications

1. Dispositif de transmission rotative, en particulier pour le réglage d'un dossier d'un siège de véhicule, comprenant :

   - une première partie de ferrure (5) pourvue d'une denture intérieure,
   - un disque étagé (3) avec un premier étage (31) ayant un premier rayon r et un deuxième étage (32) ayant un deuxième rayon R, le deuxième rayon R étant supérieur au premier rayon r et le deuxième étage (32) du disque étagé (3) étant disposé de manière excentrique dans la première partie de ferrure (5),
   - une deuxième partie de ferrure (6) pourvue d'une denture extérieure, qui est disposée concentriquement sur le premier étage (31) du disque étagé (3), et
   - deux éléments de clavette (4) qui sont disposés entre le disque étagé (3) et la première partie de ferrure (5) et qui peuvent être entraînés de manière à provoquer un mouvement de roulement l'une par rapport à l'autre des dentures intérieure et extérieure s'engrenant.

2. Dispositif de transmission rotative selon la revendication 1, dans lequel la première partie de ferrure (5) est disposée fixement et la deuxième partie de ferrure (6) roule.

3. Dispositif de transmission rotative selon la revendication 1, dans lequel la deuxième partie de ferrure (6) est disposée fixement et la première partie de ferrure (5) roule.

4. Dispositif de transmission rotative selon l'une quelconque des revendications 1 à 3, comprenant en outre un élément de ressort (2) qui accouple l'une à l'autre les deux clavettes (4).

**5.** Dispositif de transmission rotative selon l'une quelconque des revendications 1 à 4, dans lequel au moins un élément d'entraînement (33) s'étend depuis le deuxième étage (32) du disque étagé (3) radialement vers l'extérieur.

**6.** Dispositif de transmission rotative selon la revendication 5, dans lequel deux éléments d'entraînement (33) sont prévus, lesquels sont disposés à l'opposé l'un de l'autre.

**7.** Dispositif de transmission rotative selon l'une quelconque des revendications 1 à 6, comprenant en outre un disque de préhension (1), qui est disposé concentriquement au disque étagé (3) et qui est accouplé de manière solidaire en rotation au disque étagé (3).

**8.** Dispositif de transmission rotative selon l'une quelconque des revendications 1 à 4, comprenant en outre un disque de préhension (1) présentant au moins un élément d'entraînement (33), qui est disposé concentriquement au disque étagé (3), de telle sorte qu'une rotation du disque de préhension (1) entraîne un déplacement des clavettes (4) provoqué par l'au moins un élément d'entraînement (33).

**9.** Dispositif de transmission rotative selon l'une quelconque des revendications précédentes, comprenant en outre un jonc (7) pour fixer la première partie de ferrure (5), la deuxième partie de ferrure (6) et le disque étagé (3) dans la direction axiale.

**10.** Dispositif de transmission rotative selon l'une quelconque des revendications précédentes, dans lequel le nombre des dents de la denture intérieure de la première partie de ferrure (5) ne correspond pas au nombre des dents de la denture extérieure de la deuxième partie de ferrure (6).

Fig. 1

Fig. 3 "Stand der Technik"

A'

rm2

R2

ff2

Fs

Fs

Ω2

60

50

40

100

Fig. 2

32

31

33

R1

r1

Fs

Fs

Fs

4

10

6

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10144840 A1